# EUROPÄISCHE PATENTSCHRIFT

(11) **EP 2 619 840 B1**
(45) Veröffentlichungstag und Bekanntmachung des Hinweises auf die Patenterteilung: **07.01.2015**
(21) Anmeldenummer: 11749389.0
(22) Anmeldetag: 12.08.2011
(51) Int. Cl.: H01M 10/44, B60L 11/18, H02J 7/00

(54) **VERFAHREN ZUR INBETRIEBNAHME EINES BATTERIESYSTEMS MIT EINEM GLEICHSPANNUNGSZWISCHENKREIS**
METHOD FOR STARTING UP A BATTERY SYSTEM HAVING A DC VOLTAGE INTERMEDIATE CIRCUIT
PROCÉDÉ DE MISE EN SERVICE D'UN SYSTÈME DE BATTERIE DOTÉ D'UN CONVERTISSEUR INDIRECT DE TENSION CONTINUE

(30) Priorität: 20.09.2010 DE 102010041009
(43) Veröffentlichungstag der Anmeldung: 31.07.2013
(73) Patentinhaber: Samsung SDI Co., Ltd., Gyeonggi-do (KR); Robert Bosch GmbH, 70442 Stuttgart (DE)
(72) Erfinder: BUTZMANN, Stefan, 71717 Beilstein (DE); FINK, Holger, 70567 Stuttgart (DE)
(74) Vertreter: Bee, Joachim
(86) Internationale Anmeldenummer: PCT/EP2011/063967
(87) Internationale Veröffentlichungsnummer: WO 2012/038154

(56) Entgegenhaltungen:
- EP-A1- 2 061 116
- US-A- 5 773 962
- US-A- 6 140 799
- LEON M TOLBERT ET AL: "Multilevel Converters for Large Electric Drives", IEEE TRANSACTIONS ON INDUSTRY APPLICATIONS, IEEE SERVICE CENTER, PISCATAWAY, NJ, US, Bd. 35, Nr. 1, 1. Februar 1999 (1999-02-01), XP011022532, ISSN: 0093-9994

## Beschreibung

Die vorliegende Erfindung betrifft ein Verfahren zur Inbetriebnahme eines Batteriesystems mit einem Gleichspannungszwischenkreis sowie eine Batterie und ein Batteriesystem mit einem Gleichspannungszwischenkreis, welche ausgebildet sind, das Verfahren zur Inbetriebnahme auszuführen.

### Stand der Technik

Es zeichnet sich ab, dass in Zukunft sowohl bei stationären Anwendungen als auch bei Fahrzeugen wie Hybrid- und Elektrofahrzeugen vermehrt Batteriesysteme zum Einsatz kommen werden. Um die für eine jeweilige Anwendung gegebenen Anforderungen an Spannung und zur Verfügung stellbare Leistung erfüllen zu können, werden eine hohe Zahl von Batteriezellen in Serie geschaltet. Da der von einer solchen Batterie bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen. Dies kann entweder durch Vorsehen von mehreren Zellwickeln innerhalb eines Batteriezellengehäuses oder durch externes Verschalten von Batteriezellen geschehen.

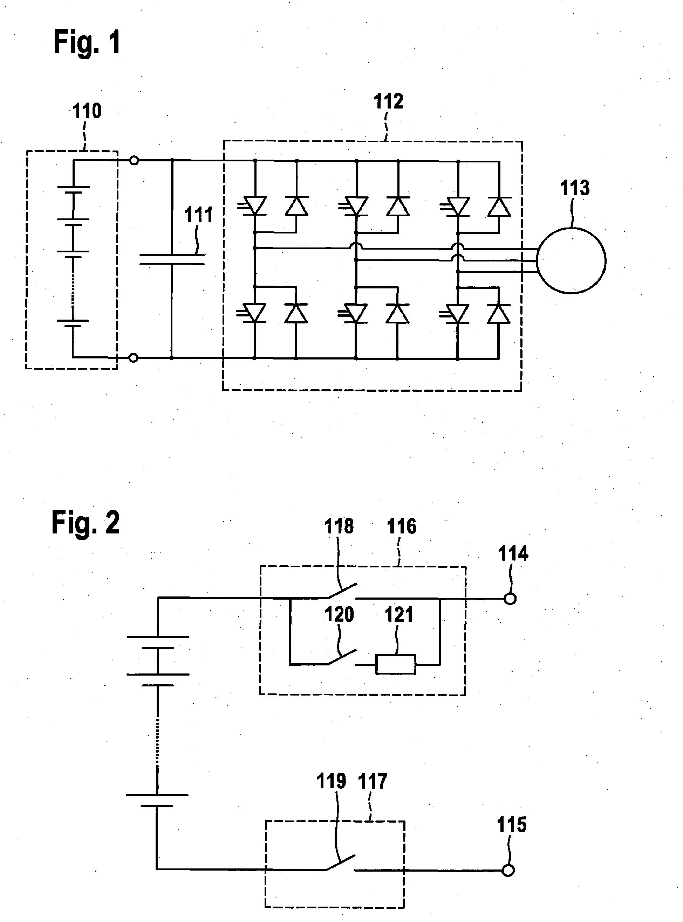

Das Prinzipschaltbild eines üblichen elektrischen Antriebssystems, wie es beispielsweise in Elektro- und Hybrid-Fahrzeugen oder auch in stationären Anwendungen wie bei der Rotorblattverstellung von Windkraftanlagen zum Einsatz kommt, ist in Figur 1 dargestellt. Eine Batterie 110 ist an einen Gleichspannungszwischenkreis angeschlossen, welcher durch einen Kondensator 111 gebildet wird. An den Gleichspannungszwischenkreis angeschlossen ist ein Pulswechselrichter 112, der über jeweils zwei schaltbare Halbleiterventile und zwei Dioden an drei Ausgängen gegeneinander phasenversetzte Sinusspannungen für den Betrieb eines elektrischen Antriebsmotors 113 bereitstellt. Die Kapazität des Kondensators 111, der den Gleichspannungszwischenkreis bildet, muss groß genug sein, um die Spannung im Gleichspannungszwischenkreis für eine Zeitdauer, in der eines der schaltbaren Halbleiterventile durchgeschaltet wird, zu stabilisieren. In einer praktischen Anwendung wie einem Elektrofahrzeug ergibt sich eine hohe Kapazität im Bereich bis zu einigen mF.

Figur 2 zeigt die Batterie 110 der Figur 1 in einem detaillierteren Blockschaltbild. Eine Vielzahl von Batteriezellen sind in Serie sowie optional zusätzlich parallel geschaltet, um eine für eine jeweilige Anwendung gewünschte hohe Ausgangsspannung und Batteriekapazität zu erreichen. Zwischen den Pluspol der Batteriezellen und ein positives Batterieterminal 114 ist eine Lade- und Trenneinrichtung 116 geschaltet. Optional kann zusätzlich zwischen den Minuspol der Batteriezellen und ein negatives Batterieterminal 115 eine Trenneinrichtung 117 geschaltet werden. Die Trenn- und Ladeeinrichtung 116 und die Trenneinrichtung 117 umfassen jeweils ein Schütz 118 beziehungsweise 119, welche dafür vorgesehen sind, die Batteriezellen von den Batterieterminals abzutrennen, um die Batterieterminals spannungsfrei zu schalten. Aufgrund der hohen Gleichspannung der seriengeschalteten Batteriezellen ist andernfalls erhebliches Gefährdungspotential für Wartungspersonal oder dergleichen gegeben. In der Lade- und Trenneinrichtung 116 ist zusätzlich ein Ladeschütz 120 mit einem zu dem Ladeschütz 120 in Serie geschalteten Ladewiderstand 121 vorgesehen. Der Ladewiderstand 121 begrenzt einen Aufladestrom für den Kondensator 111, wenn die Batterie an den Gleichspannungszwischenkreis angeschlossen wird. Hierzu wird zunächst das Schütz 118 offen gelassen und nur der Ladeschütz 120 geschlossen. Erreicht die Spannung am positiven Batterieterminal 114 die Spannung der Batteriezellen, kann das Schütz 119 geschlossen und gegebenenfalls das Ladeschütz 120 geöffnet werden.

Das Ladeschütz 120 und der Ladewiderstand 121 stellen in Anwendungen, die eine Leistung im Bereich einiger 10 kW aufweisen, bedeutenden Mehraufwand dar, der lediglich für den einige hundert Millisekunden dauernden Ladevorgang des Gleichspannungszwischenkreises benötigt wird. Die genannten Komponenten sind nicht nur teuer, sondern auch groß und schwer, was besonders für den Einsatz in mobilen Anwendungen wie elektrischen Kraftfahrzeugen störend ist.

Aus der Druckschrift EP 2 061 116 A1 ist eine Vorrichtung bekannt, die aus einer Vielzahl von in Serie geschalteten Batteriemodulen besteht und für den Einsatz in einem Gleichspannungsnetz beim Antrieb von Fahrzeugen konzipiert wurde. Jedes Modul weist eine Speichereinheit und eine Koppeleinheit auf, die durch einen Schalter repräsentiert wird. Die Speichereinheit kann eine Batterie sein. Mittels des Schalters ist es möglich, die Batterie in Serie mit den übrigen Modulen des Modulstrangs zu schalten oder aber die Batterie zu umgehen. Die Vorrichtung erlaubt es durch die Auswahl der Anzahl der miteinander in Serie geschalteten Batterien eine bestimmte Gleichspannung bereitzustellen.

### Offenbarung der Erfindung

Die Erfindung bezieht sich auf ein Verfahren zur Inbetriebnahme eines Batteriesystems mit einer Batterie, einem mit der Batterie verbundenen Gleichspannungszwischenkreis und einem mit dem Gleichspannungszwischenkreis verbundenen Antriebssystem, wobei die Batterie eine Mehrzahl von in Serie geschalteten Batteriemodulen (40, 60) besitzt, welche jeweils eine Koppeleinheit (30, 50) und wenigstens eine zwischen einen ersten Eingang (31, 51) und einen zweiten Eingang (32, 52) der Koppeleinheit (30, 50) geschaltete Batteriezelle (11) umfassen, das Verfahren wenigstens die folgenden Schritte aufweisend:
a) Abkoppeln der Batteriezellen (11) aller seriengeschalteter Batteriemodule (40, 60) durch Ausgeben eines entsprechenden Steuersignals an die Koppeleinheiten (30, 50) der seriengeschalteten Batteriemodule (40, 60);
b) ausgangsseitiges Überbrücken aller seriengeschalteten Batteriemodule (40, 60), so dass eine Ausgangsspannung der Batterie Null wird;
c) Ankoppeln der Batteriezellen eines der seriengeschalteten Batteriemodule (40, 60) und Beenden des ausgangsseitigen Überbrückens des einen der seriengeschalteten Batteriemodule (40, 60) durch Beenden des Ausgebens des entsprechenden Steuersignals an die Koppeleinheit (30, 50) des einen der seriengeschalteten Batteriemodule (40, 60) und
d) Wiederholen des Schrittes c) für jeweils ein weiteres der seriengeschalteten Batteriemodule (40, 60), wodurch eine Spannung des Gleichspannungszwischenkreises kontinuierlich schrittweise erhöht wird, wobei die Spannung einen stufigen Verlauf aufweist, der im Mittel ungefähr linear ist, wenigstens bis die Spannung des Gleichspannungszwischenkreises eine erste Sollbetriebsspannung erreicht; und
e) der Inbetriebnahme des mit dem Gleichspannungszwischenkreis verbundenen Antriebssystems, wenn die Spannung des Gleichspannungszwischenkreises eine zweite Sollbetriebsspannung erreicht.

Das Verfahren der Erfindung bietet den Vorteil, dass die Ausgangsspannung der Batterie und damit auch die Spannung des Gleichspannungszwischenkreises schrittweise gesteigert wird, so dass aufgrund der bei jedem Steigerungsschritt verhältnismäßig geringen Spannungsdifferenz zwischen der Ausgangsspannung der Batterie und der Spannung des Gleichspannungszwischenkreises auch verhältnismäßig geringe Ladeströme in den Kondensator des Gleichspannungszwischenkreises fließen, um die Spannung des Gleichspannungszwischenkreises an die Ausgangsspannung der Batterie anzugleichen. Auf diese Weise werden das Ladeschütz 120 und der Ladewiderstand 121 der Batteriesysteme des Standes der Technik überflüssig und Kosten, Volumen und Gewicht eines nach dem erfindungsgemäßen Verfahren arbeitenden Batteriesystems sinken entsprechend.

Das Verfahren der Erfindung besitzt außerdem den Vorteil, dass der Gleichspannungszwischenkreis in einer kürzeren Zeit aufgeladen wird. In einem Batteriesystem mit der in Figur 2 gezeigten Batterie mit Lade- und Trenneinrichtung 116 wird der Gleichspannungszwischenkreis bis zum Schließen des Schützes 118 mit einer Charakteristik geladen, die einer Exponentialfunktion mit negativem Exponenten entspricht. Dies bedeutet, dass zu Beginn des Aufladevörgangs der maximale Aufladestrom fließt, welcher mit fortschreitender Aufladung des Gleichspannungszwischenkreises jedoch immer weiter abnimmt, so dass sich die Spannung des Gleichspannungszwischenkreises asymptotisch dem Wert der Ausgangsspannung der Batterie nähert. Gemäß dem Verfahren der Erfindung wird die Spannung des Gleichspannungszwischenkreises jedoch kontinuierlich schrittweise erhöht, so dass sie einen stufigen Verlauf zeigt, der im Mittel ungefähr linear ist. Die Steigung der gemittelten Spannung des Gleichspannungszwischenkreises entspricht dem durchschnittlichen Ladestrom, welcher über den gesamten Ladevorgang hinweg wenigstens näherungsweise konstant ist, wodurch die erste Sollbetriebsspannung entsprechend schneller erreicht wird.

Die zweite Sollbetriebsspannung kann gleich der ersten Sollbetriebsspannung sein, dann endet das Verfahren zur Inbetriebnahme des Batteriesystems mit dem Erreichen der ersten beziehungsweise zweiten Sollbetriebsspannung und der Inbetriebnahme des Antriebssystems. Alternativ kann die zweite Sollbetriebsspannung kleiner als die erste Sollbetriebsspannung sein. In diesem Fall wird das Antriebssystem bereits in Betrieb genommen, bevor die Spannung des Gleichspannungszwischenkreises die erste Sollbetriebsspannung erreicht, und bis zum Erreichen der ersten Sollbetriebsspannung mit verringerter Leistung betrieben.

Bevorzugt wird der Schritt c) wiederholt, bis die Batteriezellen aller seriengeschalteten Batteriemodule angekoppelt, das heißt in Serie geschaltet sind. In diesem Fall ist die erste Sollbetriebsspannung gleich der maximalen Ausgangsspannung der Batterie, welche durch Serienschaltung der Batteriezellen aller Batteriemodule entsteht. Die maximale Ausgangsspannung der Batterie korrespondiert mit der maximal möglichen Antriebsleistung des Antriebssystems.

Ein zweiter Aspekt der Erfindung führt eine Batterie mit einer Steuereinheit und einer Mehrzahl von in Serie geschalteten Batteriemodulen ein. Jedes Batteriemodul umfasst dabei eine Koppeleinheit und wenigstens eine zwischen einen ersten Eingang und einen zweiten Eingang der Koppeleinheit geschaltete Batteriezelle. Die Steuereinheit ist erfindungsgemäß dazu ausgebildet, das Verfahren des ersten Erfindungsaspektes durchzuführen.

Besonders bevorzugt sind dabei die Batteriezellen der Batteriemodule Lithium-Ionen-Batteriezellen. Lithium-Ionen-Batteriezellen besitzen die Vorteile einer hohen Zellspannung und eines hohen Energiegehaltes in einem gegebenen Volumen.

Ein weiterer Erfindungsaspekt betrifft ein Batteriesystem mit einer Batterie, einem mit der Batterie verbundenen Gleichspannungszwischenkreis und einem mit dem Gleichspannungszwischenkreis verbundenen Antriebssystem. Die Batterie ist dabei gemäß dem vorhergehenden Aspekt der Erfindung ausgebildet.

Besonders bevorzugt ist der Gleichspannungszwischenkreis dabei direkt mit der Batterie verbunden, das heißt, es sind keine weitere Komponenten zwischen der Batterie und dem Gleichspannungszwischenkreis vorgesehen, insbesondere Ladevorrichtung beziehungsweise kein Ladeschütz und kein Ladewiderstand. Bei Ausführungsformen des Batteriesystems können jedoch auch weitere Komponenten wie Stromsensoren zwischen die Batterie und Gleichspannungszwischenkreis geschaltet sein.

Der Gleichspannungszwischenkreis kann einen Kondensator aufweisen oder aus einem Kondensator bestehen.

Ein vierter Aspekt der Erfindung führt ein Kraftfahrzeug mit einem Batteriesystem gemäß dem vorhergehenden Aspekt der Erfindung ein.

### Zeichnungen

Ausführungsbeispiele der Erfindung werden anhand der Zeichnungen und der nachfolgenden Beschreibung näher erläutert, wobei gleiche Bezugszeichen gleiche oder funktional gleichartige Komponenten bezeichnen. Es zeigen:
Figur 1 ein elektrisches Antriebssystem gemäß dem Stand der Technik,
Figur 2 ein Blockschaltbild einer Batterie gemäß dem Stand der Technik,
Figur 3 eine erste Ausführung einer Koppeleinheit zum Einsatz in einer Batterie, mit der das erfindungsgemäße Verfahren ausgeführt werden kann,
Figur 4 eine mögliche schaltungstechnische Umsetzung der ersten Ausführungsform der Koppeleinheit,
Figuren 5 und 6 zwei Ausführungsformen eines Batteriemoduls mit der ersten Ausführungsform der Koppeleinheit,
Figur 7 eine zweite Ausführungsform einer Koppeleinheit zum Einsatz in einer Batterie, mit der das erfindungsgemäße Verfahren ausgeführt werden kann,
Figur 8 eine mögliche schaltungstechnische Umsetzung der zweiten Ausführungsform der Koppeleinheit,
Figur 9 eine Ausführungsform eines Batteriemoduls mit der zweiten Ausführungsform der Koppeleinheit,
Figur 10 eine Batterie, mit der das erfindungsgemäße Verfahren ausgeführt werden kann, und
Figur 11 und 12 Verläufe der Spannung des Gleichspannungszwischenkreises für ein Batteriesystem gemäß dem Stand der Technik und eines gemäß der Erfindung.

### Ausführungsformen der Erfindung

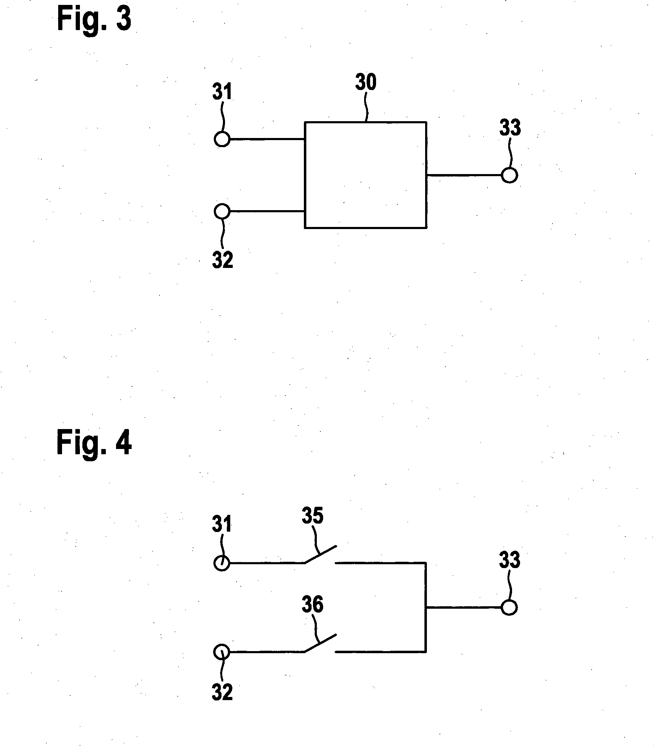

Figur 3 zeigt eine erste Ausführung einer Koppeleinheit 30 zum Einsatz in einer Batterie, mit der das erfindungsgemäße Verfahren ausgeführt werden kann. Die Koppeleinheit 30 besitzt zwei Eingänge 31 und 32 sowie einen Ausgang 33 und ist ausgebildet, einen der Eingänge 31 oder 32 mit dem Ausgang 33 zu verbinden und den anderen abzukoppeln.

Figur 4 zeigt eine mögliche schaltungstechnische Umsetzung der ersten Ausführungsform der Koppeleinheit 30, bei der ein erster und ein zweiter Schalter 35 beziehungsweise 36 vorgesehen sind. Jeder der Schalter 35, 36 ist zwischen einen der Eingänge 31 beziehungsweise 32 und den Ausgang 33 geschaltet. Diese Ausführungsform bietet den Vorteil, dass auch beide Eingänge 31, 32 vom Ausgang 33 abgekoppelt werden können, so dass der Ausgang 33 hochohmig wird, was beispielsweise im Fall einer Reparatur oder Wartung nützlich sein kann. Zudem können die Schalter 35, 36 einfach als Halbleiterschalter wie z. B. MOSFETs oder IGBTs verwirklicht werden. Halbleiterschalter haben den Vorteil eines günstigen Preises und einer hohen Schaltgeschwindigkeit, so dass die Koppeleinheit 30 innerhalb einer geringen Zeit auf ein Steuersignal beziehungsweise eine Änderung des Steuersignals reagieren kann.

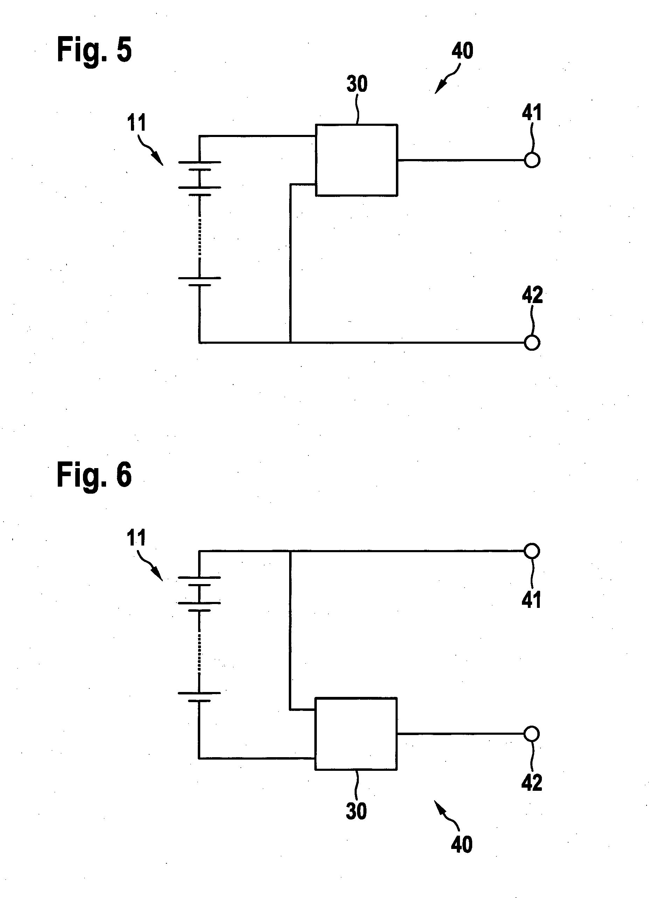

Die Figuren 5 und 6 zeigen zwei Ausführungsformen eines Batteriemoduls 40 mit der ersten Ausführungsform der Koppeleinheit 30. Eine Mehrzahl von Batteriezellen 11 ist zwischen die Eingänge der Koppeleinheit 30 in Serie geschaltet. Die Erfindung ist jedoch nicht auf eine solche Serienschaltung von Batteriezellen 11 beschränkt, es kann auch nur eine einzelne Batteriezelle 11 vorgesehen sein oder aber eine Parallelschaltung oder gemischt-seriell-parallele Schaltung von Batteriezellen 11. Im Beispiel der Figur 5 sind der Ausgang der Koppeleinheit 30 mit einem ersten Terminal 41 und der negative Pol der Batteriezellen 11 mit einem zweiten Terminal 42 verbunden. Es ist jedoch eine beinahe spiegelbildliche Anordnung wie in Figur 6 möglich, bei der der positive Pol der Batteriezellen 11 mit dem ersten Terminal 41 und der Ausgang der Koppeleinheit 30 mit dem zweiten Terminal 42 verbunden sind.

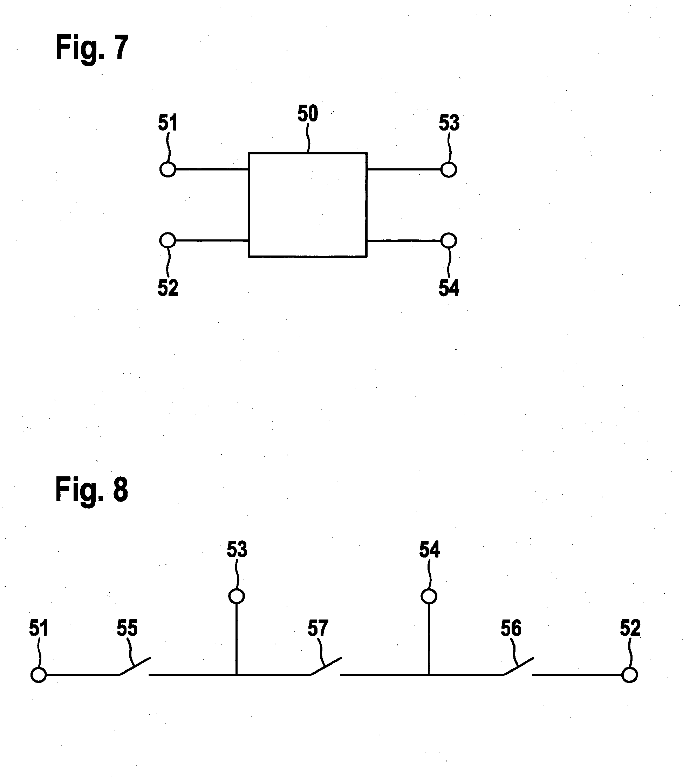

Figur 7 zeigt eine zweite Ausführungsform einer Koppeleinheit 50 zum Einsatz in einer Batterie, mit der das erfindungsgemäße Verfahren ausgeführt werden kann. Die Koppeleinheit 50 besitzt zwei Eingänge 51 und 52 sowie zwei Ausgänge 53 und 54. Sie ist ausgebildet, entweder den ersten Eingang 51 mit dem ersten Ausgang 53 sowie den zweiten Eingang 52 mit dem zweiten Ausgang 54 zu verbinden (und den ersten Ausgang 53 vom zweiten Ausgang 54 abzukoppeln) oder aber den ersten Ausgang 53 mit dem zweiten Ausgang 54 zu verbinden (und dabei die Eingänge 51 und 52 abzukoppeln). Bei bestimmten Ausführungsformen der Koppeleinheit 50 kann diese außerdem ausgebildet sein, beide Eingänge 51, 52 von den Ausgängen 53, 54 abzutrennen und auch den ersten Ausgang 53 vom zweiten Ausgang 54 abzukoppeln. Nicht vorgesehen ist jedoch, sowohl den ersten Eingang 51 mit dem zweiten Eingang 52 zu verbinden.

Figur 8 zeigt eine mögliche schaltungstechnische Umsetzung der zweiten Ausführungsform der Koppeleinheit 50, bei der ein erster, ein zweiter und ein dritter Schalter 55, 56 und 57 vorgesehen sind. Der erste Schalter 55 ist zwischen den ersten Eingang 51 und den ersten Ausgang 53 geschaltet, der zweite Schalter 56 ist zwischen den zweiten Eingang 52 und den zweiten Ausgang 54 und der dritte Schalter 57 zwischen den ersten Ausgang 53 und den zweiten Ausgang 54 geschaltet. Diese Ausführungsform bietet ebenfalls den Vorteil, dass die Schalter 55, 56 und 57 einfach als Halbleiterschalter wie z. B. MOSFETs oder IGBTs verwirklicht werden können. Halbleiterschalter haben den Vorteil eines günstigen Preises und einer hohen Schaltgeschwindigkeit, so dass die Koppeleinheit 50 innerhalb einer geringen Zeit auf ein Steuersignal beziehungsweise eine Änderung des Steuersignals reagieren kann.

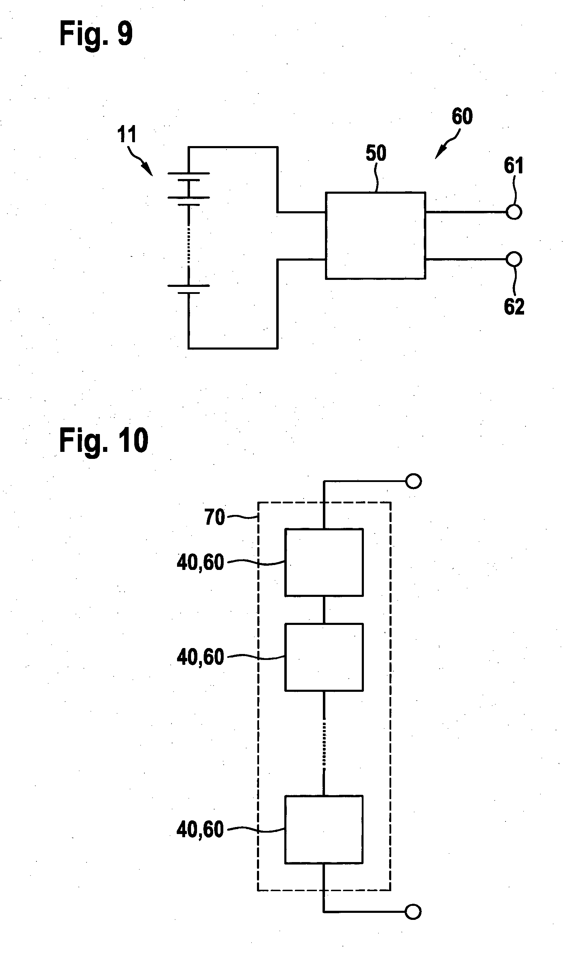

Die Figur 9 zeigt eine Ausführungsform eines Batteriemoduls 60 mit der zweiten Ausführungsform der Koppeleinheit 50. Eine Mehrzahl von Batteriezellen 11 ist zwischen die Eingänge einer Koppeleinheit 50 in Serie geschaltet. Auch diese Ausführungsform des Batteriemoduls 60 ist nicht auf eine solche Serienschaltung von Batteriezellen 11 beschränkt, es kann wiederum auch nur eine einzelne Batteriezelle 11 vorgesehen sein oder aber eine Parallelschaltung oder gemischt-seriell-parallele Schaltung von Batteriezellen 11. Der erste Ausgang der Koppeleinheit 50 ist mit einem ersten Terminal 61 und der zweite Ausgang der Koppeleinheit 40 mit einem zweiten Terminal 62 verbunden. Das Batteriemodul 60 bietet gegenüber dem Batteriemodul 40 der Figuren 5 und 6 den Vorteil, dass die Batteriezellen 11 durch die Koppeleinheit 50 von der restlichen Batterie beidseitig abgekoppelt werden können, was einen gefahrlosen Austausch im laufenden Betrieb ermöglicht, da an keinem Pol der Batteriezellen 11 die gefährliche hohe Summenspannung der restlichen Batteriemodule der Batterie anliegt.

Figur 10 zeigt eine Ausführungsform einer Batterie, mit der das erfindungsgemäße Verfahren ausgeführt werden kann. Die Batterie weist einen Batteriemodulstrang 70 mit einer Mehrzahl von Batteriemodulen 40 oder 60 auf, wobei vorzugsweise jedes Batteriemodul 40 oder 60 dieselbe Anzahl von Batteriezellen 11 in identischer Weise verschaltet enthält. Generell kann der Batteriemodulstrang 70 jede Zahl von Batteriemodulen 40 oder 60 größer 1 enthalten. Auch können an den Polen des Batteriemodulstranges 70 zusätzlich Lade- und Trenneinrichtungen und Trenneinrichtungen wie bei Figur 2 vorgesehen sein, wenn Sicherheitsbestimmungen dies erfordern. Allerdings sind solche Trenneinrichtungen erfindungsgemäß nicht notwendig, weil eine Abkopplung der Batteriezellen 11 von den Batterieanschlüssen durch die in den Batteriemodulen 40 oder 60 enthaltenen Koppeleinheiten 30 oder 50 erfolgen kann.

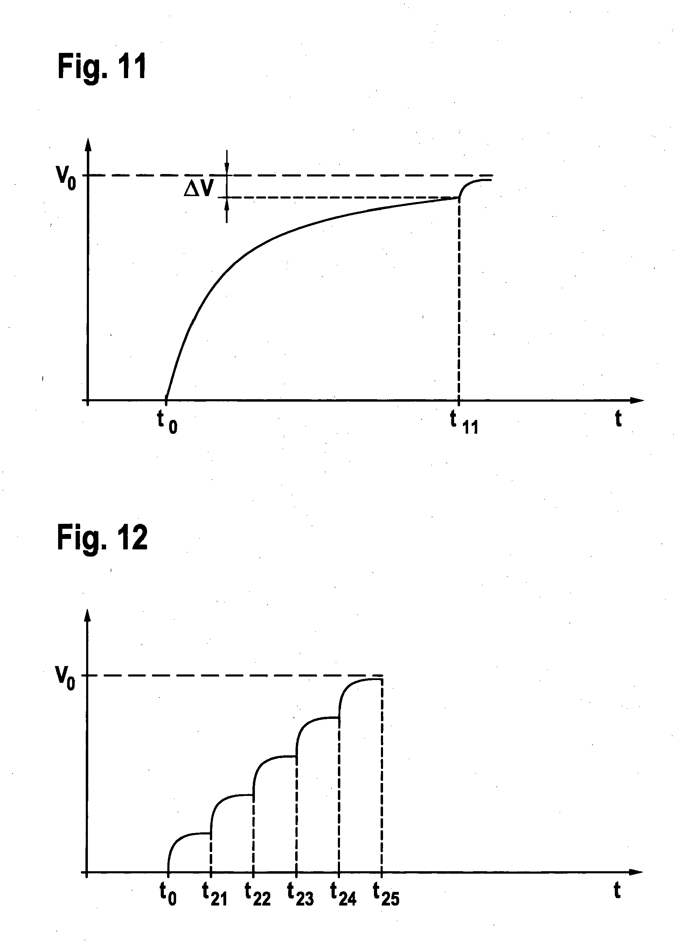

Die Figuren 11 und 12 zeigen Verläufe der Spannung des Gleichspannungszwischenkreises für ein Batteriesystem gemäß dem Stand der Technik und eines gemäß der Erfindung.

Die Figur 11 zeigt den Verlauf für ein Batteriesystem gemäß dem Stand der Technik. Zum Zeitpunkt t₀ wird die Batterie über das Ladeschütz 120 und den Ladewiderstand 121 an den Kondensator 111 des Gleichspannungszwischenkreises angelegt, wobei letzterer zu diesem Zeitpunkt vollständig entladen ist. Die Spannung des Gleichspannungszwischenkreises steigt anfangs schnell, die Steigung nimmt dann jedoch fortlaufend ab. Erst zum Zeitpunkt t₁₁ ist die Spannung des Gleichspannungszwischenkreises so hoch, dass die Differenz ΔV zwischen der Ausgangsspannung der Batterie und der Spannung des Gleichspannungszwischenkreises gering genug ist, um das Schütz 118 zu schließen und den Gleichspannungszwischenkreis ohne Strombegrenzung durch den Ladewiderstand 121 schnell bis auf die Ausgangsspannung der Batterie aufzuladen.

Die Figur 12 zeigt den entsprechenden Verlauf für ein Batteriesystem gemäß der Erfindung. Zu Beginn des Ladevorganges beträgt die Spannung des Gleichspannungszwischenkreises wiederum Null, das heißt, der Kondensator des Gleichspannungszwischenkreises ist voll entladen. Zum Zeitpunkt t₀ wird das erste Batteriemodul aktiviert, so dass die Ausgangsspannung der Batterie der Spannung eines Batteriemoduls entspricht. Der Ladestrom wird nicht durch einen Ladewiderstand begrenzt, so dass die Spannung des Gleichspannungszwischenkreises schnell ansteigt, der Ladestrom wird jedoch nicht unzulässig hoch, weil die Spannungsdifferenz zwischen der Ausgangsspannung der Batterie und der Spannung des Gleichspannungszwischenkreises verhältnismäßig gering ist. Sobald die Spannung des Gleichspannungszwischenkreises nahe an der Ausgangsspannung der Batterie ist (Zeitpunkt t₂₁), wird das nächste Batteriemodul aktiviert, wodurch die Ausgangsspannung der Batterie um die Spannung eines Batteriemoduls zunimmt und die Spannung des Gleichspannungszwischenkreises wiederum schnell der Ausgangsspannung der Batterie folgt. Das Zuschalten jeweils eines weiteren Batteriemoduls wird nun so lange wiederholt, bis die Spannung des Gleichspannungszwischenkreises die erste Sollbetriebsspannung erreicht beziehungsweise alle Batteriemodule aktiviert sind (Zeitpunkte t₂₂, t₂₃, t₂₄, t₂₅). Im gezeigten Beispiel besitzt die Batterie fünf Batteriemodule, es sind jedoch natürlich beliebige Zahlen von Batteriemodulen größer 1 möglich. Je höher die Zahl von Batteriemodulen, desto kleiner werden die Stufen des Spannungsverlaufs der Spannung des Gleichspannungszwischenkreises und somit auch der maximale Ladestrom ausfallen.

Der Vergleich der beiden Verläufe der Spannung des Gleichspannungszwischenkreises belegt, dass der Gleichspannungszwischenkreis gemäß der Erfindung deutlich schneller aufgeladen wird als im Stand der Technik üblich. Dadurch kann ein an den Gleichspannungszwischenkreis angeschlossenes Antriebssystem schneller in Betrieb gehen, was insbesondere für sicherheitsrelevante Anwendungen interessant ist.

## Patentansprüche

1. Ein Verfahren zur Inbetriebnahme eines Batteriesystems mit einer Batterie, einem mit der Batterie verbundenen Gleichspannungszwischenkreis und einem mit dem Gleichspannungszwischenkreis verbundenen Antriebssystem, wobei die Batterie eine Mehrzahl von in Serie geschalteten Batteriemodulen (40, 60) besitzt, welche jeweils eine Koppeleinheit (30, 50) und wenigstens eine zwischen einen ersten Eingang (31, 51) und einen zweiten Eingang (32, 52) der Koppeleinheit (30, 50) geschaltete Batteriezelle (11) umfassen, das Verfahren wenigstens die folgenden Schritte aufweisend:
a) Abkoppeln der Batteriezellen (11) aller seriengeschalteter Batteriemodule (40, 60) durch Ausgeben eines entsprechenden Steuersignals an die Koppeleinheiten (30, 50) der seriengeschalteten Batteriemodule (40, 60);
b) ausgangsseitiges Überbrücken aller seriengeschalteten Batteriemodule (40, 60), so dass eine Ausgangsspannung der Batterie Null wird;
c) Ankoppeln der Batteriezellen eines der seriengeschalteten Batteriemodule (40, 60) und Beenden des ausgangsseitigen Überbrückens des einen der seriengeschalteten Batteriemodule (40, 60) durch Beenden des Ausgebens des entsprechenden Steuersignals an die Koppeleinheit (30, 50) des einen der seriengeschalteten Batteriemodule (40, 60) und
d) Wiederholen des Schrittes c) für jeweils ein weiteres der seriengeschalteten Batteriemodule (40, 60), wodurch eine Spannung des Gleichspannungszwischenkreises kontinuierlich schrittweise erhöht wird, wobei die Spannung einen stufigen Verlauf aufweist, der im Mittel ungefähr linear ist, wenigstens bis die Spannung des Gleichspannungszwischenkreises eine erste Sollbetriebsspannung erreicht; und
e) der Inbetriebnahme des mit dem Gleichspannungszwischenkreis verbundenen Antriebssystems, wenn die Spannung des Gleichspannungszwischenkreises eine zweite Sollbetriebsspannung erreicht.

2. Das Verfahren gemäß Anspruch 2, bei dem die zweite Sollbetriebsspannung gleich der ersten Sollbetriebsspannung ist.

3. Das Verfahren gemäß Anspruch 2, bei dem die zweite Sollbetriebsspannung kleiner als die erste Sollbetriebsspannung ist.

4. Das Verfahren gemäß einem der vorhergehenden Ansprüche, bei dem der Schritt c) wiederholt wird, bis die Batteriezellen aller seriengeschalteten Batteriemodule (40, 60) angekoppelt sind.

5. Eine Batterie mit einer Steuereinheit und einer Mehrzahl von in Serie geschalteten Batteriemodulen (40, 60), wobei jedes Batteriemodul (40, 60) eine Koppeleinheit (30, 50) und wenigstens eine zwischen einen ersten Eingang (31, 51) und einen zweiten Eingang (32, 52) der Koppeleinheit (30, 50) geschaltete Batteriezelle (11) umfasst, **dadurch gekennzeichnet, dass** die Steuereinheit ausgebildet ist, das Verfahren gemäß einem der vorhergehenden Ansprüche durchzuführen.

6. Ein Batteriesystem mit einer Batterie, einem mit der Batterie verbundenen Gleichspannungszwischenkreis und einem mit dem Gleichspannungszwischenkreis verbundenen Antriebssystem, **dadurch gekennzeichnet, dass** die Batterie gemäß dem vorhergehenden Anspruch ausgebildet ist.

7. Das Batteriesystem gemäß dem vorhergehenden Anspruch, bei dem der Gleichspannungszwischenkreis direkt mit der Batterie verbunden ist.

8. Das Batteriesystem gemäß einem der beiden vorhergehenden Ansprüche, bei dem der Gleichspannungszwischenkreis einen Kondensator aufweist oder aus einem Kondensator besteht.

9. Ein Kraftfahrzeug mit einem Batteriesystem gemäß einem der Ansprüche 7 bis 8.

## Claims

1. Method for starting up a battery system having a battery, a DC voltage intermediate circuit that is connected to the battery, and a drive system that is connected to the DC voltage intermediate circuit, wherein the battery has a plurality of series-connected battery modules (40, 60) that in each case comprise a coupling unit (30, 50) and at least one battery cell (11) that is connected between a first input (31, 51) and a second input (32, 52) of the coupling unit (30, 50), said method comprising at least the following steps:
a) disconnect the battery cells (11) of all the series-connected battery modules (40, 60) by transmitting a corresponding control signal to the coupling units (30, 50) of the series-connected battery modules (40, 60);
b) provide a bridge on the output side of all the series-connected battery modules (40, 60) so that an output voltage of the battery is zero;
c) connect the battery cells of one of the series-connected battery modules (40, 60) and terminate the bridge on the output side of one of the series-connected battery modules (40, 60) by terminating the transmission of the corresponding control signal to the coupling unit (30, 50) of one of the series-connected battery modules (40, 60);
d) repeat the step c) for in each case a further one of the series-connected battery modules (40, 60), as a result of which a voltage of the DC voltage intermediate circuit is continuously increased incrementally, wherein said voltage has a stepped progression that is approximately linear in the middle, at least until the voltage of the DC voltage intermediate circuit achieves a first desired operating voltage; and
e) start up the drive system that is connected to the DC voltage intermediate circuit if the voltage of the DC voltage intermediate circuit achieves a second desired operating voltage.

2. Method according to Claim 1, wherein the second desired operating voltage is equal to the first desired operating voltage.

3. Method according to Claim 1, wherein the second desired operating voltage is lower than the first desired operating voltage.

4. Method according to any one of the preceding claims, wherein the step c) is repeated until the battery cells of all the series-connected battery modules (40, 60) are connected.

5. Battery comprising a control unit and a plurality of series-connected battery modules (40, 60), wherein each battery module (40, 60) comprises a coupling unit (30, 50) and at least one battery cell (11) that is connected between a first input (31, 51) and a second input (32, 52) of the coupling unit (30, 50), **characterized in that** the control unit is embodied to perform the method according to any one of the preceding claims.

6. Battery system having a battery, a DC voltage intermediate circuit that is connected to the battery, and a drive system that is connected to the DC voltage intermediate circuit, **characterized in that** the battery is embodied according to the preceding claim.

7. Battery system according to the preceding claim, wherein the DC voltage intermediate circuit is connected directly to the battery.

8. Battery system according to either one of the two preceding claims, wherein the DC voltage intermediate circuit comprises a capacitor or is embodied as a capacitor.

9. Motor vehicle having a battery system according to either of Claims 7 and 8.

## Revendications

1. Procédé de mise en service d'un système de batterie avec une batterie, un circuit intermédiaire à tension continue relié à la batterie et un système d'entraînement relié au circuit intermédiaire à tension continue, la batterie possédant une pluralité de modules de batterie (40, 60) connectés en série qui comprennent respectivement une unité de couplage (30, 50) et au moins un élément de batterie (11) connecté entre une première entrée (31, 51) et une deuxième entrée (32, 52) de l'unité de couplage (30, 50), le procédé comportant au moins les étapes suivantes :
a) découplage des éléments de batterie (11) de tous les modules de batterie (40, 60) connectés en série par émission d'un signal de commande correspondant aux unités de couplage (30, 50) des modules de batterie (40, 60) connectés en série,
b) pontage côté sortie de tous les modules de batterie (40, 60) connectés en série de sorte qu'une tension de sortie de la batterie devienne nulle,
c) couplage des éléments de batterie d'un des modules de batterie (40, 60) connectés en série et achèvement du pontage côté sortie d'un des modules de batterie (40, 60) connectés en série par achèvement de l'émission du signal de commande correspondant à l'unité de couplage (30, 50) de l'un des modules de batterie (40, 60) connectés en série et
d) répétition de l'étape c) pour respectivement un autre des modules de batterie (40, 60) connectés en série, par lequel une tension du circuit intermédiaire à tension continue est augmentée progressivement en continu, la tension comportant une allure graduelle qui est en moyenne à peu près linéaire, au moins jusqu'à ce que la tension du circuit intermédiaire à tension continue atteigne une première tension de service théorique, et
e) mise en service du système d'entraînement relié au circuit intermédiaire à tension continue si la tension du circuit intermédiaire à tension continue atteint une deuxième tension de service théorique.

2. Procédé selon la revendication 1 pour lequel la deuxième tension de service théorique est identique à la première tension de service théorique.

3. Procédé selon la revendication 1 pour lequel la deuxième tension de service théorique est plus faible que la première tension de service théorique.

4. Procédé selon l'une quelconque des revendications précédentes, pour lequel l'étape c) est répétée jusqu'à ce que les éléments de batterie de tous les modules de batterie (40, 60) connectés en série soient couplés.

5. Batterie avec une unité de commande et une pluralité de modules de batterie (40, 60) connectés en série, chaque module de batterie (40, 60) comprenant une unité de couplage (30, 50) et au moins un élément de batterie (11) connecté entre une première entrée (31, 51) et une deuxième entrée (32, 52) de l'unité de couplage (30, 50), **caractérisée en ce que** l'unité de commande est constituée pour exécuter le procédé selon l'une quelconque des revendications précédentes.

6. Système de batterie avec une batterie, un circuit intermédiaire à tension continue relié à la batterie et un système d'entraînement relié au circuit intermédiaire à tension continue, **caractérisé en ce que** la batterie est constituée selon la revendication précédente.

7. Système de batterie selon la revendication précédente pour lequel le circuit intermédiaire à tension continue est directement relié à la batterie.

8. Système de batterie selon l'une quelconque des revendications précédentes pour lequel le circuit intermédiaire à tension continue comporte un condensateur ou est composé d'un condensateur.

9. Véhicule avec un système de batterie selon l'une quelconque des revendications 7 à 8.
